# EUROPEAN PATENT APPLICATION

(11) **EP 4 227 063 A1**
(43) Date of publication of application: **16.08.2023**
(21) Application number: 23155520.2
(22) Date of filing: 08.02.2023
(51) Int. Cl.: B29C 48/00, B29C 48/09, B29C 44/20, B29C 44/32, B29C 44/34, B29C 44/44, B29C 44/14, B29C 48/16

(54) **METHOD FOR PRODUCING EXTRUDED MOLDING**

(30) Priority: 09.02.2022 JP 2022019012
(71) Applicant: JSP Corporation, Tokyo 100-0005 (JP)
(72) Inventor: YAMAJI, Hiroyuki, Tochigi, 322-0014 (JP); HOSHINO, Tomohiro, Tochigi, 322-0014 (JP); OHTA, Naofumi, Tochigi, 322-0014 (JP)
(74) Representative: BOVARD AG

(57) **Abstract**

To produce a desirable extruded molding including an outer layer having a hollow shape formed by extrusion and a foamed core material formed by fusing foamed particles that are introduced into a hollow portion defined by the outer layer, a thermoplastic resin is extruded through a die (22) to form an outer layer (2) having a hollow shape by extrusion, foamed particles of a thermoplastic resin are introduced into a hollow portion defined by the outer layer (2) through a foamed particle introduction passage (31) that is arranged inside the hollow portion (4) defined by the outer layer (2) so as to orient to an extruding direction for the outer layer (2), and the foamed particles are fused together by supplying steam from a steam supply portion (350) of a steam supply pipe (35) that is arranged inside the hollow portion (4) defined by the outer layer (2) along the extruding direction for the outer layer (2) while discharging the steam through a steam discharge portion (360) of a steam discharge pipe (36) that is arranged inside the hollow portion (4) defined by the outer layer (2) along the extruding direction for the outer layer (2).

## Description

### Technical Field

The present invention relates to a method for producing an extruded molding including an outer layer having a hollow shape formed by extrusion and a foamed core material formed by fusing foamed particles introduced into a hollow portion defined by the outer layer.

### Background Art

Hitherto, there is known a hollow molded product formed by extruding a thermoplastic resin into a hollow shape. The hollow molded product is used for various purposes that require lightness. However, the hollow molded product inevitably has disadvantages in terms of strength because of its hollow shape. In view of elimination of the disadvantages in terms of strength while maintaining lightness, Patent Literature 1 proposes a foamed body-filled extrusion molded product (1) having the following configuration. In Patent Literature 1, the foamed body-filled extrusion molded product (1) is obtained by introducing a core body (2) into a hollow portion defined by an extruded outer layer (11). The core body (2) is formed by fusing together and integrating foamed-body particles (21) made of a thermoplastic resin. The hollow portion is defined by an extruded outer layer (11), which is formed by extruding a thermoplastic resin into a hollow shape.

The reference symbols used in Patent Literature 1 are parenthesized and used herein as reference symbols in the description for Patent Literature 1.

### Citation List

### Patent Literature

[Patent Literature 1] JP 10-291244 A

### Summary of Invention

### Technical Problem

In a first embodiment of Patent Literature 1, the foamed-body particles (21) are fused together by heat transferred from the extruded outer layer (11) having a high temperature in a molten state. However, it is actually difficult to sufficiently transfer heat to a center portion of the core body (2). As a result, the fusion of the foamed-body particles (21) may become unsatisfactory in the center portion of the core body (2), or secondary foaming of the foamed-body particles (21) may be insufficient. Meanwhile, it is described that, when the foamed-body particles (21) are to be sufficiently fused together, an inside of the molded product is steam-heated with use of a steam introduction pipe (887). However, there still remain problems in that, for example, the steam introduction pipe (887) may hinder flow of a molten resin and thereby cause degradation in appearance of the extruded outer layer (11).

Thus, in view of the problems described above, as a result of keen examinations for production of a desirable extruded molding including an outer layer having a hollow shape formed by extrusion and a foamed core material formed by fusing foamed particles introduced into a hollow portion defined by the outer layer, the inventors of the present invention have completed the present invention.

### Solution to Problem

According to the present invention, there is provided a method for producing an extruded molding, the extruded molding including: an outer layer having a hollow shape formed by extrusion; and a foamed core material formed by fusing foamed particles introduced into a hollow portion defined by the outer layer, the method including: extruding a thermoplastic resin through a die to form the outer layer having the hollow shape by extrusion; introducing foamed particles of a thermoplastic resin into the hollow portion defined by the outer layer through a foamed particle introduction passage that is arranged inside the hollow portion defined by the outer layer so as to orient to an extruding direction for the outer layer; and fusing the foamed particles together by supplying steam from a steam supply portion of a steam supply pipe that is arranged inside the hollow portion defined by the outer layer along the extruding direction for the outer layer while discharging the steam through a steam discharge portion of a steam discharge pipe that is arranged inside the hollow portion defined by the outer layer along the extruding direction for the outer layer.

### Advantageous Effects of Invention

According to the present invention, it is possible to produce the desirable extruded molding including the outer layer having a hollow shape formed by extrusion and the foamed core material formed by fusing the foamed particles introduced into the hollow portion defined by the outer layer.

### Brief Description of Drawings

FIG. 1 is an explanatory view for illustrating an example of an extruded molding produced by a method for producing an extruded molding according to an embodiment of the present invention.

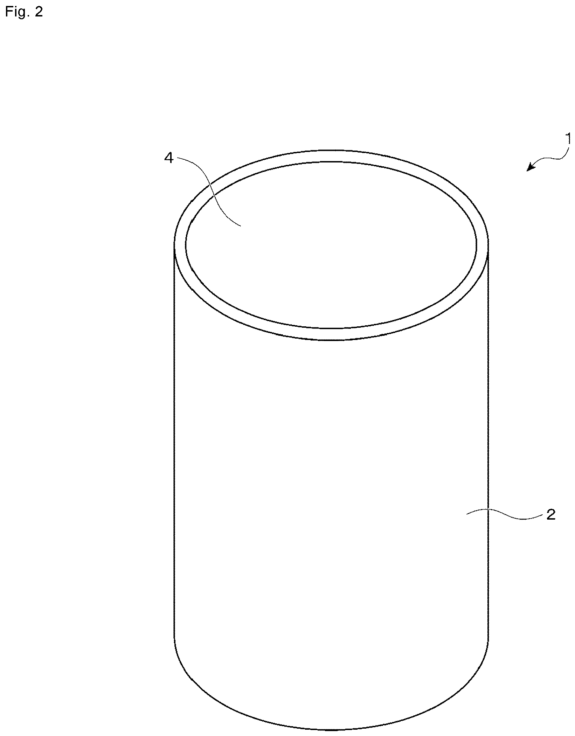

FIG. 2 is an explanatory view for illustrating a state in which an outer layer alone is formed in the method for producing an extruded molding illustrated in FIG. 1.
FIG. 3 is an explanatory view for schematically illustrating an example of a production apparatus suitable for carrying out the method for producing an extruded molding according to the embodiment of the present invention.
FIG. 4 is an explanatory view for illustrating a preferred positional relationship between steam supply portions of a steam supply pipe and steam discharge portions of a steam discharge pipe.

### Description of Embodiments

Now, preferred embodiments of the present invention are described with reference to the drawings.

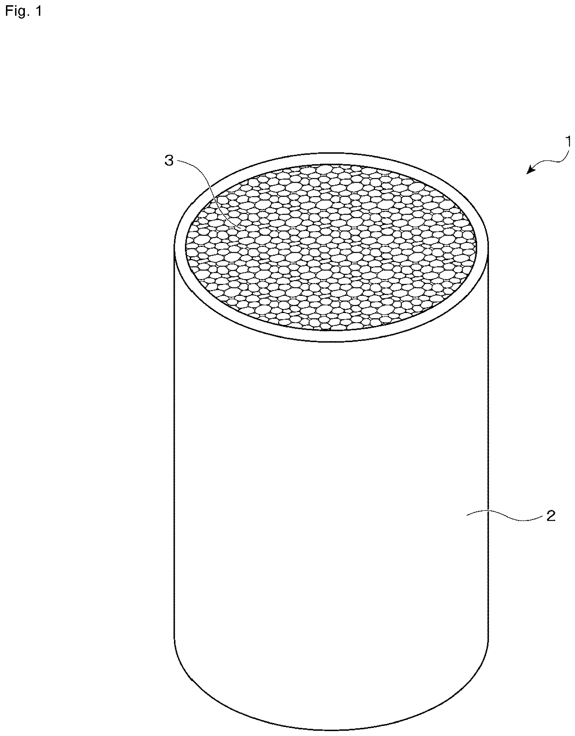

FIG. 1 is a view for illustrating an example of an extruded molding 1 produced by a method for producing an extruded molding according to this embodiment. The extruded molding 1 includes an outer layer 2 and a foamed core material 3. The outer layer 2 has a hollow shape formed by extrusion. The foamed core material 3 is provided in a hollow portion 4 defined by the outer layer 2.

In this embodiment, the outer layer 2 can be formed by using an appropriate thermoplastic resin that can be extruded into a hollow shape. More specific examples thereof include, but not limited to: polyolefin-based resins, such as low-density polyethylene (LDPE), high-density polyethylene (HDPE), linear low-density polyethylene (LLDPE), polypropylene (propylene homopolymer: h-PP), a propylene-ethylene random copolymer (r-PP), and a propylene-ethylene block copolymer (b-PP); polystyrene-based resins, such as polystyrene (styrene homopolymer: GPPS), impact-resistant polystyrene (HIPS), a styrene-methyl methacrylate copolymer (MS), an acrylonitrile-styrene copolymer (AS), a polystyrene-modified polyphenylene ether (modified PPE), and an acrylonitrile-styrene-butadiene copolymer (ABS); polyester-based resins, such as polyethylene terephthalate (PET), polybutylene terephthalate (PBT), and polylactic acid (PLA); polycarbonate-based resins such as bisphenol-type polycarbonate (PC); and mixtures thereof. In view of, for example, mechanical properties such as strength and heat resistance which are required for the extruded molding 1, a thermoplastic resin can be appropriately selected from thermoplastic resins that allow the outer layer 2 to be formed by extrusion.

Further, various additives can be added to the thermoplastic resin for forming the outer layer 2. Examples of the additive include a conductivity-imparting agent, an antioxidant, a heat stabilizer, a weathering agent, a UV inhibitor, a flame retardant, an inorganic filler, an antibacterial agent, an electromagnetic wave shielding agent, a gas barrier agent, an antistatic agent, and reinforced fibers such as a glass fiber and a carbon fiber. These additives are added within a range in which objects and effects of the additives can be achieved. The amount of additive is substantially 30 parts by weight or less, preferably 20 parts by weight or less, further preferably 10 parts by weight or less to 100 parts by weight of a thermoplastic resin.

The foamed core material 3 is a fused body of foamed particles of a thermoplastic resin and is formed by fusing foamed particles together.

Further, it is preferred that the foamed core material 3 inside the hollow portion 4 defined by the outer layer 2 be fused and integrated with an inner peripheral surface of the outer layer 2.

A resin having high compatibility with the thermoplastic resin for forming the outer layer 2 is preferred as a thermoplastic resin to be used for the foamed particles in order to achieve desirable fusion with the outer layer 2 and enhance strength of the extruded molding 1. In particular, it is preferred to use the same kind of thermoplastic resin or the same thermoplastic resin as the thermoplastic resin for forming the outer layer 2. For the reasons described above, when a polyolefin-based resin is selected as the thermoplastic resin for forming the outer layer 2, it is preferred to use a polyolefin-based resin for the foamed particles for forming the foamed core material 3. Further, when a polystyrene-based resin is selected as the thermoplastic resin for forming the outer layer 2, it is preferred to use a polystyrene-based resin or a composite resin of a polystyrene-based resin and a polyethylene-based resin for the foamed particles for forming the foamed core material 3.

Examples of the foamed particles of the foamed core material 3 include commercially available foamed particles, products each having a bulk density falling within a range of from 15 kg/m³ to 90 kg/m³ out of products each available under a product name "P-BLOCK (trademark)" each of which is a polypropylene-based resin foamed body manufactured by JSP Co., Ltd., products each having a bulk density falling within a range of from 15 kg/m³ to 80 kg/m³ out of products each available under a product name "L-Block (trademark)" each of which is a polyethylene-based resin foamed body manufactured by JSP Co., Ltd., products each having a bulk density falling within a range of from 15 kg/m³ to 80 kg/m³ out of products each available under a product name "LACTIF (trademark)" each of which is foamed particles of a polylactic acid-based resin manufactured by JSP Co., Ltd., foamed particles of a polystyrene resin obtained by foaming a product available under a product name "STYRODIA (trademark)" which is foaming polystyrene resin particles manufactured by JSP Co., Ltd. into a predetermined bulk density with a prefoaming machine, and foamed particles of a composite resin (polyethylene/polystyrene) obtained by foaming a product available under a product name "ELEMPOR NEO (trademark)" manufactured by JSP Co., Ltd. into a predetermined bulk density with a prefoaming machine. In addition, the foamed particles may be obtained with reference to JP 53-1313 A, WO 2012/086305 A1, and JP 2012-025869 A, which have hitherto been known.

A shape of each of the foamed particles may be any appropriate shape such as a columnar shape, a spherical shape, a prismatic shape, or an oval spherical shape, and a size of each of the foamed particles may also be appropriately set. In terms of a filling rate, it is preferred that the shape of each of the foamed particles be spherical or columnar.

A bulk density of the foamed particles used in this embodiment is not limited to any particular density. In general, it is preferred that foamed particles having a bulk density falling within a range of from 10 kg/m³ to 100 kg/m³ be used. In particular, when foamed particles of a polyolefin-based resin or foamed particles of a polystyrene-based resin are used, it is more preferred that foamed particles having a bulk density falling within a range of from 15 kg/m³ to 50 kg/m³ be used in terms of easier control of secondary foaming with steam.

Next, description is made of an example of a production apparatus suitable for carrying out a method for producing an extruded molding according to this embodiment.

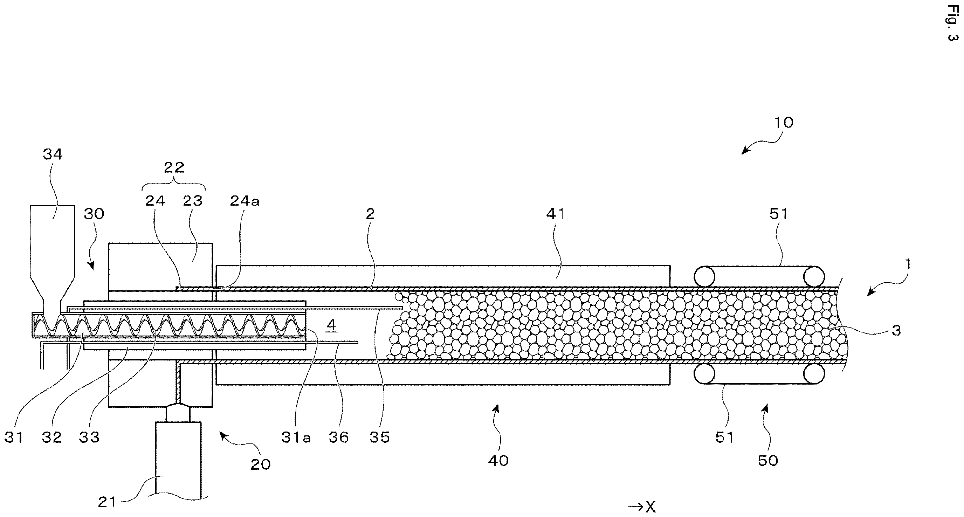

FIG. 3 is a view for schematically illustrating an example of the production apparatus.

A production apparatus 10 illustrated in FIG. 3 includes an outer-layer forming unit 20, a foamed-particle introduction unit 30, a cooling unit 40, and a receiving unit 50. The outer-layer forming unit 20 extrudes a thermoplastic resin into a hollow shape to thereby form the outer layer 2 by extrusion. The foamed-particle introduction unit 30 introduces foamed particles into the hollow portion 4 defined by the outer layer 2 having a hollow shape formed by extrusion. The cooling unit 40 includes a sizing die 41. The receiving unit 50 includes conveyors 51. An arrow X in FIG. 3 indicates an extruding direction.

The outer-layer forming unit 20 includes a die 22 for forming the outer layer 2 by extrusion. A thermoplastic resin, which has been molten and kneaded in an extruder 21, is supplied to the die 22 which then extrudes the thermoplastic resin in a softened state into a hollow shape. In an example illustrated in FIG. 3, the die 22 for forming the outer layer 2 by extrusion includes a die main body 23 and a resin flow passage portion 24 defined inside the die main body 23. The die 22 is configured so that the thermoplastic resin supplied from the extruder 21 passes through the resin flow passage portion 24 and is extruded into a hollow shape through an ejection port 24a corresponding to an opening of the resin flow passage portion 24.

In the illustrated example, the resin flow passage portion 24 is defined so that the outer layer 2 having a cylindrical shape is formed by extrusion. However, a shape of the outer layer 2 is not limited to the cylindrical shape. The outer layer 2 having an elliptic cylindrical shape or a square tube shape can also be formed by extrusion by appropriately changing a shape of the ejection port 24a corresponding to an opening of the resin flow passage portion 24. In addition, the outer layer 2 can also be formed in a hollow shape by extrusion with a semi-circular sectional shape, a fan-like sectional shape, a trapezoidal sectional shape, or other different sectional shapes.

The foamed particle introduction unit 30 includes a foamed particle introduction passage 31. The foamed particle introduction passage 31 is arranged inside the hollow portion 4 defined by the outer layer 2 having a hollow shape formed by extrusion. In the illustrated example, the foamed particle introduction passage 31 is defined inside a cylinder body portion 32. The cylinder body portion 32 passes in an axial direction on an inner peripheral side of the resin flow passage portion 24 of the die 22 for forming the outer layer 2 by extrusion and protrudes in the extruding direction for the outer layer 2. Then, foamed particles supplied from a hopper 34 provided on an upstream side of the cylinder body portion 32 are conveyed by a screw feeder 33 disposed in the foamed particle introduction passage 31 and are ejected in the extruding direction for the outer layer 2 from an ejection port 31a which opens at a distal end portion of the foamed particle introduction passage 31. Further, the foamed particle ejection port 31a which opens at the distal end portion of the cylinder body portion 32 is located on a downstream side in the extruding direction for the outer layer 2 with respect to the outer layer ejection port 24a of the resin flow passage 24 for forming the outer layer 2.

In this case, it is preferred that the foamed particles be crammed in a compressed state into the hollow portion 4 defined by the outer layer 2. It is preferred that a direction in which the foamed particles are crammed match the extruding direction for the outer layer 2. In this case, the "compressed state" refers to a state in which the foamed particles are crammed at a higher density than the measured bulk density of the foamed particles. More specifically, it is preferred that the foamed particles be crammed at a density about 1.01 times to 1.5 times, more preferably about 1.02 times to 1.2 times as large as the bulk density of the foamed particles.

For simpler drawing, for example, foamed particles conveyed by the screw feeder 33 and foamed particles ejected from the foamed particle ejection port 31a of the foamed particle introduction passage 31 are not shown in FIG. 3.

For the achievement of the foamed particle introduction passage 31 having the configuration described above, a screw shape of the screw feeder 33 provided in the foamed particle introduction passage 31 can be appropriately selected so that the foamed particles are introduced into the hollow portion 4 defined by the outer layer 2. A screw having a screw shape with screw blades arranged around a center shaft (shafted screw) or a screw having a screw shape with a helical-shaped blade alone (shaftless screw) is preferred. For example, a shaftless screw is advantageous in that, even when clogging of foamed particles occurs at the distal end of the foamed particle introduction passage 31 during the conveyance of the foamed particles, the shaftless screw can convey the foamed particles at a constant pressure while spinning. Thus, the shaftless screw is suitable for a case in which foamed particles of a polystyrene-based resin that contains an organic foaming agent and has excellent secondary foamability are to be formed with low-pressure steam. Meanwhile, for foamed particles of an olefine-based resin, which are formed with relatively highpressure steam, it is suitable to use a shafted screw because drain water generated as a result of condensation of steam may inhibit the conveyance of foamed particles. In any case, the foamed particles can be introduced in a further compressed state into the hollow portion 4 defined by the outer layer 2 by appropriately selecting the screw shape.

Further, a steam supply pipe 35 and a steam discharge pipe 36 are arranged inside the cylinder body portion 32. The steam supply pipe 35 and the steam discharge pipe 36 are arranged along the extruding direction for the outer layer 2 and protrude beyond the ejection port 31a from around the foamed particle introduction passage 31 at the distal end portion of which the ejection port 31a opens. The steam supply pipe 35 and the steam discharge pipe 36 are arranged along the extruding direction for the outer layer 2, and thus do not affect a state in which the outer layer 2 is being formed. Accordingly, an extruded foamed body having no unevenness on the outer layer 2 and being excellent in appearance can be formed.

For the arrangement of the steam supply pipe 35 and the steam discharge pipe 36 inside the cylinder body portion 32, for example, one steam supply pipe 35 and one steam discharge pipe 36 may be arranged so as to be opposed to each other in a radial direction of the cylinder body portion 32. One or both of the steam supply pipe 35 and the steam discharge pipe 36 may also be provided in plurality, and all the pipes may be arranged at suitable intervals in a circumferential direction of the cylinder body portion 32.

It is preferred that the cylinder body portion 32 have holes for insertion of the steam supply pipe 35 and the steam discharge pipe 36. The holes are formed around the foamed particle introduction passage 31 so that the steam supply pipe 35 and the steam discharge pipe 36 are inserted thereinto. Further, it is preferred that a bottom surface of the cylinder body portion 32, which corresponds to a distal end portion of a columnar shape of the cylinder body portion 32, be a flat surface except for the hole defining the foamed particle introduction passage 31 and the hole portions into which the steam supply pipe 35 and the steam discharge pipes 36 are to be inserted so as to prevent backflow of the introduced foamed particles.

It is preferred that the steam supply pipe 35 and the steam discharge pipe 36 be metal pipes that allow steam to be supplied and discharged therethrough. It is preferred that an outer diameter of each of the metal pipes fall within a range of from 5 mm to 30 mm. Further, it is preferred that each of the steam supply pipe 35 and the steam discharge pipe 36 have a closed distal end and that a side surface of the steam supply pipe 35 have steam supply portions 350 and a side surface of the steam discharge pipe 36 have steam discharge portions 360. The steam supply portions 350 and the steam discharge portions 360 can be formed by forming, for example, slit-shaped or elongated pores, each having a shape and a size that do not allow foamed particles to move into the pipes, in the side surface of the steam supply pipe 35 and the side surface of the steam discharge pipe 36, respectively.

When the steam supply portions 350 and the steam discharge portions 360 are formed in the steam supply pipe 35 and the steam discharge pipe 36, respectively, in the above-mentioned manner, the number of pores to be formed is not limited to any particular number. When a plurality of pores are formed, the arrangement thereof is not limited to any particular one. The plurality of pores may be arranged in one row or a plurality of rows extending in a longitudinal direction or may be arranged in a staggered manner or randomly. As an example, the steam supply portions 350 and the steam discharge portions 360 may be defined by forming a total of nine pores at three positions on the distal end portion side of each of the pipes 35 and 36 and at three positions in the circumferential direction. Each of the pores has, for example, a slit-like shape with a width falling within a range of from 0.1 mm to 0.5 mm and a length falling within a range of from 5 mm to 20 mm. It is preferred that the width and the length of the pores to be formed be appropriately adjusted so that the sum of opening areas of the pores falls within a range of from 10 mm³ to 100 mm³. It is preferred that the pores to be formed in the steam supply pipe 35 and the steam discharge pipe 36 be formed in peripheral wall portions of the pipes 35 and 36, respectively. It is preferred that the above-mentioned pores be formed at equal spacings in the peripheral wall portions of the pipes 35 and 36 in view of uniform supply and discharge of steam.

The arrangement of the steam supply pipe 35 and the steam discharge pipe 36 (for example, a length of a part projecting beyond a distal end portion of the cylinder body portion 32) and the number and arrangement of pores to be formed in each of the steam supply pipe 35 and the steam discharge pipe 36 can be appropriately set. It is preferred that the above-mentioned arrangements and numbers be set so that steam is discharged through the steam discharge portions 360 of the steam discharge pipe 36 while the steam is being supplied from the steam supply portions 350 of the steam supply pipe 35 to the foamed particles introduced into the hollow portion 4 defined by the outer layer 2 and the steam is traveling toward the die 22.

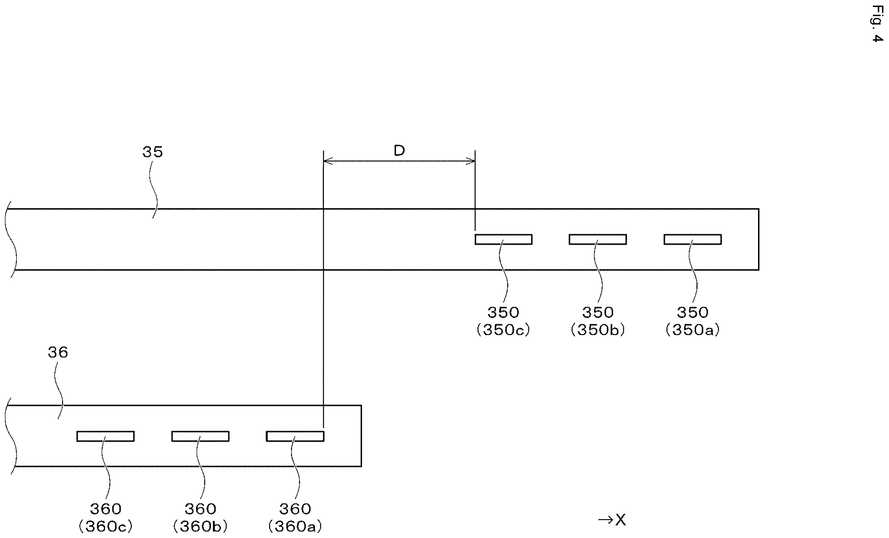

For example, as illustrated in FIG. 4, when the steam supply portions 350 and the steam discharge portions 360 are formed by forming pores in the distal end portions of the steam supply pipe 35 and the steam discharge pipe 36 so as to have the same arrangement, it is preferred that the steam supply pipe 35 and the steam discharge pipe 36 be arranged along the extruding direction for the outer layer 2 in such a manner that a length of the projecting part of the steam discharge pipe 36 beyond the distal end portion of the cylinder body portion 32 becomes shorter than that of the projecting part of the steam supply pipe 35. An arrow X in FIG. 4 indicates the extruding direction.

In particular, in this embodiment, it is preferred that the steam supply pipe 35 and the steam discharge pipe 36 be arranged so that a steam discharge portion 360a, which is located closest to the distal end portion of the steam discharge pipe 36, is away to the die 22 side from a steam supply portion 350c, which is located at a position farthest from the distal end portion of the steam supply pipe 35 in a direction toward the die 22. This arrangement is described later.

With the method for producing an extruded molding according to this embodiment, the production apparatus 10 described above is suitably used to first extrude the thermoplastic resin through the die 22 to thereby form the outer layer 2 having a hollow shape by extrusion. At the same time, the foamed particles of the thermoplastic resin are introduced in the extruding direction for the outer layer 2 through the foamed particle introduction passage 31 arranged inside the hollow portion 4 defined by the outer layer 2 into the hollow portion 4 defined by the outer layer 2.

It is preferred that an extrusion temperature for the outer layer 2 be higher than a melting point or a softening point of the thermoplastic resin for forming the outer layer 2 by 5°C to 40°C, more preferably 10°C to 30°C.

Then, while the above-mentioned steps are continuously carried out, steam is supplied from the steam supply portions 350 of the steam supply pipe 35 that is arranged in the hollow portion 4 defined by the outer layer 2 along the extruding direction for the outer layer 2. At the same time, steam is discharged through the steam discharge portions 360 of the steam discharge pipe 36 that is arranged in the hollow portion 4 defined by the outer layer 2 along the extruding direction for the outer layer 2. At this time, it is preferred that steam be supplied under a state in which foamed particles are crammed and compressed in the hollow portion 4 defined by the outer layer 2. The supply of steam heats and softens the foamed particles and causes secondary foaming. As a result, the foamed particles are fused together into a fused body to thereby form the foamed core material 3.

In the above-mentioned step, it is preferred that a pressure (pressure in the steam supply pipe 35) of the steam supplied from the steam supply portions 350 of the steam supply pipe 35 be a gauge pressure falling within a range of from 0.1 MPa (G) to 0.5 MPa (G). Meanwhile, when the steam is discharged through the steam discharge portions 360, it is preferred that, for example, the steam discharge pipe 36 be connected to a suction pipe to reduce a pressure in the steam discharge pipe 36 (preferably, to 0.01 MPa (G) to 0.1 MPa (G)) so that the steam is sucked into the steam discharge pipe 36 and is efficiently discharged through the steam discharge portions 360.

As illustrated in FIG. 3, in consideration of routing of the pipes, the steam supply pipe 35 and the steam discharge pipe 36 can be provided so as to pass through the cylinder body portion 32 in the extruding direction and extend in parallel to the screw feeder 33 disposed in the foamed particle introduction passage 31. In this case, the cylinder body portion 32 can include a temperature regulating mechanism as needed so as to more easily cause the secondary foaming of the foamed particles. In particular, it is preferred that a temperature of the cylinder body portion 32 be regulated to a temperature falling within a range of from 50°C to 100°C. As a result, the foamed particles are preheated so that the secondary foaming is more easily caused by steam heating, and easier molding in a limited molding space is achieved.

The extruded molding 1 is formed in a continuous manner through the above-mentioned steps that are carried out continuously. Then, the extruded molding 1 is received by the conveyors 51 while being cooled by a sizing die 41. After that, the extruded molding 1 is cut to have a predetermined length as needed.

According to this embodiment described above, foamed particles located in the vicinity of the outer layer 2 among the foamed particles introduced into the hollow portion 4 defined by the outer layer 2 are fused with foamed particles adjacent thereto by heat transferred from the outer layer 2 that is in a softened state after the extrusion molding. At the same time, the foamed particles are fused and integrated with the inner peripheral surface of the outer layer 2.

Further, when the steam supply pipe 35 and the steam discharge pipe 36 are disposed in a specific arrangement and the foamed particles are heated with steam so as to cause the secondary foaming of the foamed particles, the foamed particles can be fused together while eliminating gaps between the foamed particles that have been introduced. Further, an expansion ratio of the foamed core material 3 obtained by fusing the foamed particles together can be increased, or an expansion ratio or the degree of fusion of the foamed core material 3 can be equalized.

Thus, according to this embodiment, the extruded molding 1 including the outer layer 2 having a hollow shape formed by extrusion and the foamed core material 3 formed by fusing the foamed particles introduced into the hollow portion 4 defined by the outer layer 2 can be desirably produced. In particular, in this embodiment, the foamed particles in a center portion of the foamed core material 3 can suitably be fused together through the steam supplied from the steam supply portions 350 of the steam supply pipe 35. The steam supply pipe 35 is arranged inside the hollow portion 4 defined by the surface later 2 along the extruding direction for the outer layer 2. Thus, the method according to this embodiment is suitable for the production of the extruded molding 1 having a large thickness. Even when the extruded molding 1 having a maximum thickness of 100 mm or larger is to be produced, the foamed core material 3 can be desirably produced. In particular, a fusion rate of the foamed core material 3 can be improved.

When the extruded molding 1 has a columnar shape, its maximum thickness corresponds to a diameter.

Further, when the secondary foaming of the foamed particles is caused and the gaps between the foamed particles are eliminated thereby, steam may fail to spread through all the foamed particles that have been introduced into the hollow portion 4 defined by the outer layer 2 or may fail to reach the steam discharge portions 360 of the steam discharge pipe 36, resulting in locally insufficient heating. In order to effectively prevent such inconvenience, it is preferred that the steam be supplied so that the steam is discharged through the steam discharge portions 360 of the steam discharge pipe 36 while the steam supplied from the steam supply portions 350 of the steam supply pipe 35 is traveling toward the die 22.

In this embodiment, the foamed particles that have been introduced into the hollow portion 4 defined by the outer layer 2 are fused together while traveling together with the outer layer 2 in the extruding direction for the outer layer 2. Accordingly, subsequent foamed particles, which have not been fused yet, keep traveling toward the steam supply portions 350 of the steam supply pipe 350. Thus, when the steam supplied from the steam supply portions 350 of the steam supply pipe 35 is caused to travel toward the die 22 in a direction opposite to the extruding direction for the outer layer 2, the steam can pass through the gaps between subsequent foamed particles, reach the steam discharge portions 360 of the steam discharge pipe 36, and then be discharged therethrough while causing the secondary foaming and the fusion of the subsequent foamed particles. As a result, the secondary foaming of the foamed particles occurs in a stable manner to uniformly fuse the foamed particles in the hollow portion 4. Further, the steam remaining inside the foamed core material 3 is efficiently discharged through the steam discharge portions 360. Thus, drain water, which may be generated as a result of condensation of steam, can be prevented from remaining in the foamed core material 3.

From the above-mentioned points of view, as described above, it is preferred that the steam supply pipe 35 and the steam discharge pipe 36 be arranged so that the steam discharge portion 360a, which is located closest to the distal end portion of the steam discharge pipe 36, is away to the die 22 side from the steam supply portion 350c, which is located farthest from the distal end portion of the steam supply pipe 35 in the direction toward the die 22. In order to achieve the above-mentioned mode, it is preferred that a separation distance D in the extruding direction for the outer layer 2 between the steam supply portion 350c, which is located at the position farthest from the distal end portion of the steam supply pipe 35 in the direction toward the die 22, and the steam discharge portion 360a, which is located closest to the distal end portion of the steam discharge pipe 36, be set to fall within a range of from 20 mm to 500 mm, more preferably from 20 mm to 200 mm in consideration of, for example, a receiving speed of the conveyers 51 for the extruded molding 1. In this manner, when the steam supply pipe 35 and the steam discharge pipe 36 are arranged so that the steam supply portions 350 and the steam discharge portions 360 have a given distance therebetween, the flow of steam traveling toward the die 22 in the direction opposite to the extruding direction for the outer layer 2 can be desirably caused to easily fuse the foamed particles.

When the steam supply pipe 35 has only one steam supply portion 350, the steam supply portion 350 located at the position farthest from the distal end portion of the steam supply pipe 35 in the direction toward the die 22 corresponds to the only one steam supply portion 350. The same applies to the steam discharge pipe 36.

When a plurality of pipes are provided as any one or both of the steam supply pipe 35 and the steam discharge pipe 36 so as to achieve the above-mentioned mode, all the steam supply pipe(s) 35 and the steam discharge pipe(s) 36 are not required to be arranged so as to satisfy the above-mentioned relationship as long as the flow of steam traveling toward the die 22 in the direction opposite to the extruding direction for the outer layer 2 can be caused. It is only required that the above-mentioned relationship be satisfied between at least one steam supply pipe 35 and at least one steam discharge pipe 36. It is preferred that the above-mentioned relationship be satisfied between the steam supply pipe 35 on a downmost stream side in the extruding direction and at least one steam discharge pipe 36.

Further, when the foamed core material 3 is formed of foamed particles of an olefin-based resin, a pressure of the steam supplied from the steam supply pipe 35 is required to be set higher because a secondary foaming temperature of the foamed particles of an olefin-based resin is higher and thus a molding temperature becomes higher. In such a case, it is preferred that an additional steam discharge pipe 36 be provided in addition to the steam discharge pipe 36 that is arranged so as to satisfy the above-mentioned relationship with respect to one steam supply pipe 35. The additional steam discharge pipe 36 is provided so that the steam discharge portions 360 are located in the vicinity of the steam supply portions 350 of the steam supply pipe 35 in order to actively suck drain water generated as a result of condensation of steam.

Further, it is preferred that the foamed core material 3 have a drain hole for discharging drain water generated as a result of condensation of steam remaining inside the foamed core material 3. In this embodiment, the steam supply pipe 35 and the steam discharge pipe 36 are arranged inside the hollow portion 4 defined by the outer layer 2 along the extruding direction for the outer layer 2. Thus, the pipes 35 and 36 prevent the foamed particles that have been introduced into the hollow portion defined by the outer layer 2 from being fused together, and through holes extending in the extruding direction (longitudinal direction) can easily be formed in the thus formed foamed core material 3 as traces of the pipes 35 and 36. Such through holes can be used as the drain holes.

### Examples

Now, the present invention is described more in detail by way of specific examples.

### [Example 1]

A polystyrene-based resin, which had been molten and kneaded in the extruder 21, was extruded at a resin temperature of 190°C through the die 2 so as form the outer layer 2 having a hollow shape by extrusion. In this case, the die 22 had a circular shape and a diameter of 100 mm. At the same time, foamed particles of a composite resin of polystyrene and polyethylene, which had a bulk density of 36 kg/m³, were introduced into the hollow portion 4 defined by the outer layer 2 through the foamed particle introduction passage 31 arranged inside the hollow portion 4 defined by the outer layer 2 in the extruding direction for the outer layer 2. For the introduction of foamed particles, an rpm of the screw feeder 33 of shaftless screw type, which was disposed in the cylinder body portion 32 of the foamed particle introduction passage 31, was set to 47 rpm, and a temperature of the cylinder body portion 32 was regulated to 80°C.

The foamed particles were in a compressed state in the vicinity of the steam supply portions 350 and the steam discharge portions 360 in the hollow portion 4.

The above-mentioned steps were continuously carried out, and steam was supplied into the hollow portion 4. The steam was supplied from the steam supply portions 350 of the steam supply pipe 35 that was arranged inside the hollow portion 4 defined by the outer layer 2 along the extruding direction for the outer layer 2, and at the same time, the steam was discharged through the steam discharge portions 360 of the steam discharge pipe 36 that was arranged inside the hollow portion 4 defined by the outer layer 2 along the extruding direction for the outer layer 2. The supplied steam heated and softened the foamed particles and caused secondary foaming to fuse the foamed particles together. In this case, two steam supply pipes 35 were used, and a pressure in the steam supply pipes 35 was set to 0.35 MPa (G). Two steam discharge pipes 36 were used, and a pressure in the steam discharge pipes 36 was set to -0.05 MPa (G). The steam supply pipes 35 and the steam discharge pipes 36 were arranged so that the separation distance D in the extruding direction for the outer layer 2 between the steam supply portion 350c located at a position farthest from the distal end portion of one of the steam supply pipes 35, which was located farther from the die 22, and the steam discharge portion 360a located closest to the distal end portion of one of the steam discharge pipes 36, which was located farther from the die 22, was set to 100 mm.

The above-mentioned steps were carried out continuously so that the extruded molding 1 was formed in a continuous manner. The extruded molding 1 was received by the conveyers 51 at a receiving speed of 0.35 m/minute while being cooled by the sizing die 41.

The sizing die 41 had a circular shape and a diameter of 120 mm. Further, a gap of about 15 mm was defined by the die 22 and the sizing die 41.

In the thus produced extruded molding 1, the outer layer 2 had a thickness of 2.5 mm and a weight per unit length of 1.3 kg/m. The foamed core material 3 had a density of 38 kg/m³. The extruded molding 1 had a thickness (diameter of the column) of 120 mm.

Further, the thus produced extruded molding 1 was cut in a direction perpendicular to the longitudinal direction, and a cut surface was observed. As a result of the observation, no leakage of drain water was found.

### [Bulk Density]

The bulk density of the foamed particles used in the present invention was calculated by the following method. First, five hundred or more foamed particles were left in an environment having a temperature of 23°C, a relative humidity of 50%, and an atmospheric pressure of 1 atm for twenty-four hours or longer. A foamed particle group obtained in the above-mentioned manner was introduced into a graduated cylinder so as to spontaneously accumulate therein. A bulk volume (unit: L) of the foamed particle group was read with use of the scales on the graduated cylinder. Then, a mass (unit: g) of the foamed particle group in the graduated cylinder was divided by the bulk volume described above. As a result of unit conversion of the resultant, a bulk density (unit: kg/m³) of the foamed particles was obtained.

### [Weight of Molding]

An extruded molding was cut out so as to have a length of 1 m in the extruding direction, and a weight of the molding was measured. The measurement was carried out for a total of five or more extruded moldings. Values of the measured weight were arithmetically averaged to provide a weight of a molding.

### [Outer Layer Thickness]

A circular cross section was obtained by cutting the extruded molding in a direction orthogonal to the extruding direction. A thickness of an outer layer on the cross section was measured at six positions equally spaced apart in a circumferential direction of the outer layer. This set of measurements was conducted at a total of five or more different positions (on five or more cross sections) in the extruding direction. The measured thickness values were arithmetically averaged to provide a thickness of an outer layer material.

### [Evaluation of Surface State of Outer Layer]

A surface state of the outer layer was evaluated by visual inspection.
good: No excessive unevenness was found on a surface of the outer layer 2.
poor: Unevenness having a depth of 1 mm or larger due to unsatisfactory molding was found on a surface of the outer layer 2.

### [Evaluation of Fusibility of Foamed Core Material]

A fusion rate of the foamed core material was measured as follows. First, a portion corresponding to the foamed core material was cut out of the extruded molding, and a test piece was extracted therefrom. The test piece was divided substantially equally so that fracture surfaces were exposed. A total number of foamed particles on the fracture surfaces and a total number of fractured foamed particles in the foamed particles were counted. Then, a ratio of a value of the latter to a value of the former expressed in percentage (%) was obtained as a fusion rate of the test piece.

### [Examples 2 to 5, Comparative Example 1]

The extruded moldings 1 were produced in the same manner as in Example 1 except for changes in the conditions as shown in Table 1.

**[Table 1]**

| | | Example 1 | Example 2 | Example 3 | Example 4 | Example 5 | Comparative Example 1 |
|---|---|---|---|---|---|---|---|
| Raw Material | Resin for Outer Layer | PS | PS | PS | PS | PS | PS |
| | Foam Particles of Core Material | PS/PE | PS/PE | PS/PE | PS/PE | PS/PE | PS/PE |
| | Density of Foam Particles (g/L) | 36 | 36 | 36 | 36 | 36 | 36 |
| Molding Conditions | Rpm of Screw for Introducing Foam Particles (rpm) | 47 | 47 | 47 | 47 | 47 | 47 |
| | Temperature of Cylinder Body Portion (°C) | 80 | 80 | 80 | 80 | 80 | 80 |
| | Extrusion Temperature for Outer Layer (°C) | 190 | 190 | 190 | 190 | 190 | 190 |
| | Receiving Speed (m/min) | 0.30 | 0.30 | 0.30 | 0.30 | 0.30 | 0.35 |
| | Pressure in Steam Supply Pipe (MPa) | 0.35 | 0.45 | 0.35 | 0.35 | 0.35 | 0 |
| | Number of Steam Supply Pipes | 1 | 1 | 1 | 1 | 1 | 0 |
| | Pressure in Steam Discharge Pipe (MPa) | -0.05 | -0.05 | -0.05 | -0.05 | -0.05 | 0 |
| | Number of Steam Discharge Pipes | 2 | 2 | 2 | 2 | 2 | 0 |
| | Distance D between Steam Supply Portion and Steam Discharge Portion (mm) | 100 | 100 | 100 | 50 | 150 | --- |
| Product | Outer Layer Thickness (mm) | 2.5 | 3.0 | 3.5 | 3.5 | 3.5 | 3.5 |
| | Weight of Molding (kg/m) | 1.3 | 1.4 | 1.6 | 1.6 | 1.6 | 1.6 |
| | Density of Core Material (g/L) | 38 | 38 | 38 | 38 | 38 | 38 |
| | Fusion Rate | 90 or more | 90 or more | 90 or more | 40 | 90 or more | 0 |
| | Surface State of Outer Layer | good | good | good | good | good | good |

### [Example 6, Comparative Example 2]

The extruded moldings 1 were produced in the same manner as in Example 1 except that the conditions were changed as shown in Table 2 and foamed particles of a polystyrene-based resin excellent in secondary foamability were used as the foamed particles of the core material.

**[Table 2]**

| | | Example 6 | Comparative Example 2 |
|---|---|---|---|
| Raw Material | Resin for Outer Layer | PS | PS |
| | Foam Particles of Core Material | PS | PS |
| | Density of Foam Particles (g/L) | 20 | 20 |
| Molding Condition s | Rpm of Screw for Introducing Foam Particles (rpm) | 60 | 45 |
| | Temperature of Cylinder Body Portion (°C) | 80 | 80 |
| | Extrusion Temperature for Outer Layer (°C) | 190 | 190 |
| | Receiving Speed (m/min) | 0.35 | 0.35 |
| | Pressure in Steam Supply Pipe (MPa) | 0.10 | 0.35 |
| | Number of Steam Supply Pipes | 2 | 1 |
| | Pressure in Steam Discharge Pipe (MPa) | -0.06 | 0 |
| | Number of Steam Discharge Pipes | 2 | 0 |
| | Distance D between Steam Supply Portion and Steam Discharge Portion (mm) | 100 | --- |
| Product | Outer Layer Thickness (mm) | 2.0 | 2.0 |
| | Weight of Molding (kg/m) | 1.1 | 1.1 |
| | Density of Core Material (g/L) | 22 | 22 |
| | Fusion Rate | 90 or more | 50 |
| | Surface State of Outer Layer | good | good |

The preferred embodiment of the present invention has been described above, but the present invention is not limited to the embodiment described above. Needless to say, various modifications may be made within the scope of the present invention.

### Reference Signs List

- 1: extruded molding
- 2: outer layer
- 3: foamed core material
- 4: hollow portion
- 22: die
- 31: foamed particle introduction passage
- 35: steam supply pipe
- 350 (350a, 350b, 350c): steam supply portion
- 36: steam discharge pipe
- 360 (360a, 360b, 360c): steam discharge portion
- 33: screw feeder

## Claims

1. A method for producing an extruded molding,
the extruded molding comprising:
an outer layer having a hollow shape formed by extrusion; and
a foamed core material formed by fusing foamed particles introduced into a hollow portion defined by the outer layer,
the method comprising:
extruding a thermoplastic resin through a die to form the outer layer having the hollow shape by extrusion;
introducing foamed particles of a thermoplastic resin into the hollow portion defined by the outer layer through a foamed particle introduction passage that is arranged inside the hollow portion defined by the outer layer so as to orient to an extruding direction for the outer layer; and
fusing the foamed particles together by supplying steam from a steam supply portion of a steam supply pipe that is arranged inside the hollow portion defined by the outer layer along the extruding direction for the outer layer while discharging the steam through a steam discharge portion of a steam discharge pipe that is arranged inside the hollow portion defined by the outer layer along the extruding direction for the outer layer.

2. The method for producing an extruded molding according to claim 1, wherein the steam supply pipe and the steam discharge pipe are arranged so that the steam discharge portion located closest to a distal end portion of the at least one steam discharge pipe is away to the die side from the steam supply portion located at a position farthest from a distal end portion of the at least one steam supply pipe in a direction toward the die.

3. The method for producing an extruded molding according to claim 1, wherein a separation distance in the extruding direction for the outer layer between the steam supply portion located at a position farthest from a distal end portion of the at least one steam supply pipe in a direction toward the die and the steam discharge portion located closest to a distal end portion of the at least one steam discharge pipe is set to fall within a range of from 20 mm to 500 mm.

4. The method for producing an extruded molding according to any one of claims 1 to 3,
wherein the foamed particle introduction passage includes a screw feeder, and
wherein the foamed particles are introduced into the hollow portion defined by the outer layer while being compressed by the screw feeder.

5. The method for producing an extruded molding according to any one of claims 1 to 4, wherein a maximum thickness of the extruded molding is 100 mm or larger.
